# EUROPEAN PATENT APPLICATION

(11) **EP 0 911 222 A2**
(43) Date of publication of application: **28.04.1999**
(21) Application number: 98308437.7
(22) Date of filing: 15.10.1998
(51) Int. Cl.: B60R 16/02

(54) **Conductorless & contactless transmission unit for electrical signals and power into rotation applications**

(30) Priority: 15.10.1997 DE 19745266; 17.07.1998 DE 19832256
(71) Applicant: Thomas & Betts GmbH, 63329 Egelsbach (DE)
(72) Inventor: Roeder, Juergen, Darmstadt 64297 (DE); Gesche, Roland, Dr., Seligenstadt, Froschhausen (DE)
(74) Representative: Howick, Nicholas Keith

(57) **Abstract**

The device for contact-free transfer of electrical signals between components rotating relative to each other, in particular in a steering wheel between steering column assembly and steering wheel, with an electrical circuit carrier with signal transmission and signal reception elements, said carrier is on the stator-side and an electrical circuit carrier with signal transmission and signal reception elements, said support is on the rotor-side wherein the stator-side and rotor-side electrical circuit carriers are axially or radially adjacent to each other with their signal transmission and signal reception elements, and the signal transmission and signal reception elements of the adjacent stator-side and rotor-side circuit carriers are positioned relative to each other and with their perimeter extension they are configured so that bi-directional signal transmission is possible between stator-side circuit carrier and rotor-side circuit carrier in any possible relative rotational position of the rotor-side circuit carrier with respect to the stator-side circuit carrier.

## Description

### BACKGROUND

The invention pertains to a device for contact-free transfer of electronic signals between components rotating relative to each other. One main application of the invention is in automotive engineering, namely in contact-free transmission of electronic signals between the rotating and fixed portion of the steering wheel, however, the invention can also be equally used in all other conceivable technical fields where electrical signals are to be transferred without contact, that is, without a galvanic connection by electrical conductors, slip ring contacts or the like, between a signal generator and a signal receiver rotating relative thereto, whereby the two components rotating relative to each other can be used for transmission of signals in on direction or the other and both can be either a signal generator or signal receiver.

### SUMMARY

Electronic control elements; in particular, the horn button, but also other functional switches for comfortable control of all possible functions from the steering wheel, for example, to operate the windshield wipers, lights, cruise control, radio and the like, and also electrically controlled or powered functional elements, such as to monitor and activate the airbag or steering-wheel heating can be integrated into the steering wheel.

The electrical connections between the electrical supply leads and terminal leads located on the nonrotating steering column and the control and functional elements located on the rotary steering wheel must therefore be designed so that the transmission of electrical signals can take place under consideration of the possible rotational angle range of the steering wheel with reference to the nonrotating steering column, and still ensure the required functional dependability.

Previously, the electrical connection between the rotating steering wheel and the nonrotating steering column required for this signal transfer has been handled by means of intermediate-positioned electrical conductors in the shape of a coil spring, or by slip ring designs. Before this time, there has been no possibility for contact-free signal transfer. The conventional, coil-spring-like conductor links designed with flat ribbon cable, which are called coil spring systems, form uninterrupted galvanic connections free of slip contacts which wind more tightly or unwind more loosely when turning the steering wheel in one direction or the other. Slip ring designs operate with slip rings and slip contacts cooperating with them.

The known techniques with coiled spring systems or slip ring contact systems allow only a limited number of possible signal transmission channels, depending on the system and due to certain problems of mounting and assembly; they also take up a lot of space and have only a limited operating life. Coiled spring systems, in particular, have the problem that they are sensitive to destruction due to over-rotation, and also due to fraying of the flat ribbon cable against parts of the housing during turning of the steering wheel, mechanical noise can also be produced. Slip ring systems suffer from the problem that due to wear on slide paths and slip contacts, or fatigue-related reduction in the contact spring force of the slip contacts, frayed wires and interrupts occur which are a safety hazard. All these disadvantages of conventional technology make it appear to be desirable to develop a better, more versatile device distinguished by a high dependability for the transmission of electric signals between the rotary steering wheel and the non-rotating steering column, or generally stated, between components rotating relative to each other. Therefore it is the purpose of the invention to create such a device and thus to eliminate the previously used coil spring systems.

This problem is solved in this invention by a contactless and conductor-less device for the transmission of electric signals between components rotating relative to each other, such as the steering column and steering wheel, as indicated in patent claim 1 and modified in favorable designs in the subclaims. Accordingly, the design according to this invention consists of a transmission unit that has an electric switch support (circuit board or such) on the stator-side (steering column side) and rotor side (steering wheel side), with signal transmission and signal reception elements which allow bi-directional signal transfer from stator to rotor and vice-versa.

The invented system has the following significant advantages:

Stator-side and rotor-side switching support with associated connectors, etc., can be fully mounted in the stator unit (steering column) or in the rotor unit (steering wheel) independently of each other, which greatly simplifies the eliminate the previously used coil spring systems.

This problem is solved in this invention by a contactless and conductor-less device for the transmission of electric signals between components rotating relative to each other, such as the steering column and steering wheel, as indicated in patent claim 1 and modified in favorable designs in the subclaims. Accordingly, the design according to this invention consists of a transmission unit that has an electric switch support (circuit board or such) on the stator-side (steering column side) and rotor side (steering wheel side), with signal transmission and signal reception elements which allow bi-directional signal transfer from stator to rotor and vice-versa.

The invented system has the following significant advantages:

Stator-side and rotor-side switching support with associated connectors, etc., can be fully mounted in the stator unit (steering column) or in the rotor unit (steering wheel) independently of each other, which greatly simplifies the assembly, and the transmission device is functional only after assembly of the steering wheel, when stator-side and rotor-side circuit board come into contact by the mutually approaching install position, but without mutual contact. The invented system allows the transmission of many more switching signals or the like than is possible in conventional systems. At the same time, the space requirement of the invented device is much less, and no close installation tolerances are needed. Dependability and security of the signal transmission are increased; the generation of mechanical operating noise during turning of the steering wheel is eliminated.

For practical implementation of the invented device, several variants are possible. Two such versions are described in greater detail below as representative examples, with reference to the associated drawings; but in this case, the drawings are of a more schematic nature for simplification and show only the most essential elements while omitting unnecessary details, in order to make the invention readily understandable.

### BRIEF DESCRIPTION OF THE DRAWING FIGURES

Figure 1 is an exploded perspective view of a first embodiment of a transmission device according to the invention

Figure 2 is a second embodiment of the invention presented in axial cross section.

### DETAILED DESCRIPTION OF THE PREFERRED EMBODIMENT(S)

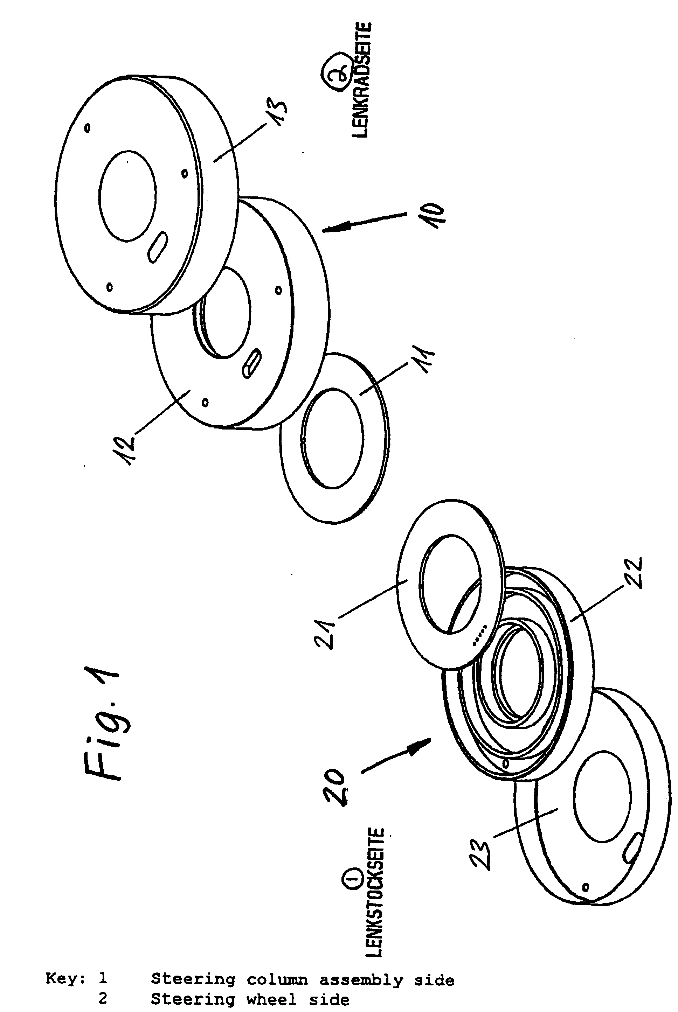

The embodiment presented in Figure 1 operates with electric antennas between the stator-side and rotor-side or between steering column assembly and steering wheel. This purely electronic embodiment of the invented transmission device features an assembly 10 on the steering wheel and an assembly 20 on the steering column.

The assembly 10 on the steering wheel consists of an upper circuit carrier 11, an upper cover 12 and an upper shield 13. The assembly 20 on the steering , accordingly, consists of a lower circuit carrier 21, a lower cover 22 and a lower shield 23.

The circuit carriers 11 and 21 of the assembly 10 on the steering wheel and of the assembly 220 on the steering column each support antennas designed as planar structures and between them the signal transmission takes place by means of high frequency. The frequency range used is in the megahertz range. The steering column forms the preliminary side and the steering wheel forms the secondary side, and this arrangement can, of course, be reversed for signals transmitted in the reverse direction.

The lower circuit carrier 21 of the steering column is installed in the lower cover 22 and the upper circuit carrier 11 is installed in the upper cover 12 of the steering . The shields formed on both sides by the lower shield 23 and the upper shield 13 prevent incorrect functions and ensure the electromagnetic compatibility in signal transmission.

As is evident in Figure 1, that is, from the representation of the lower cover 22 of the steering column which is shown with a view into its interior, the lower cover and the upper cover 12 of the steering wheel are designed so that when it is in the assembled state, its cylindrical, outer walls engage in each other in a box-like manner. The two circuit carriers in the two covers are then positioned opposite each other at a small distance, and the signal transfer then occurs wirelessly across the air gap between the two antennas to the two circuit carriers independently of the particular, relative rotational position of the circuit carriers to each other, because the two antennas have their perimeter extension on the circuit carriers configured so that the signal transfer between the two antennas is assured in any relative rotational position of the two circuit carriers. Likewise, as illustrated in Figure 1 (the upper shield 13 has a higher edge portion than the lower shield 23) the two shields 13 and 23 in the assembled state of the transmission unit have their cylindrical side wall engaging in each other so that a full shielding of the transmission unit is obtained and this will entirely block interference from the outside, but likewise will also block the emission of signals from the inside.

The basis of the circuit to be used in this embodiment of the invented signal transmission device is a resonant circuit which consists, for example, of a capacitor (secondary side) connected in series with an airbag integrated with the ignition pellet (using the airbag function illustrated here as an example), and two coils formed by the two antennas (primary and secondary side). To test the airbag ignition circuit, a continuous signal of small amplitude is transmitted from the primary to the secondary side. In case of faulty operation, an optical or acoustical signal will be output to the vehicle driver. To trigger the airbag, the amplitude of the test signal will be increased to the necessary level.

A number of signal transmission channels is obtained by different frequency modulation of one base signal. For example, the airbag test signal can be the base signal. For example, the airbag test signal can be the base signal, and by frequency modulation of this base signal, various other signals can be defined and identified . The electronic transmission device can thus be used for contact-free and conductor-less transmission of a number of signals from and to the steering wheel, corresponding to a number of operating functions and component functions. Also, a multiplex operation is also readily possible. The electronic details relevant to this are known to the ordinary person skilled in the art and thus need not be explained in detail.

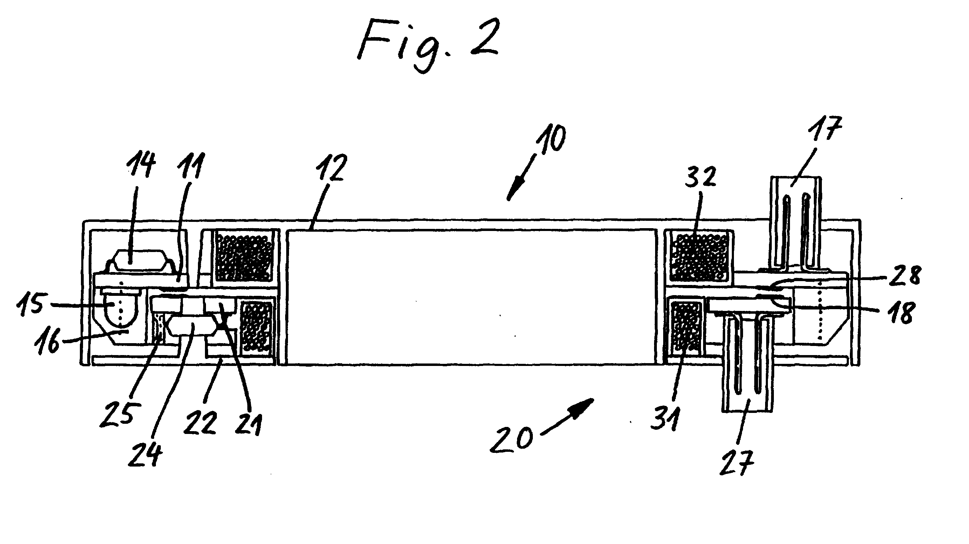

The embodiment shown in Figure 2 of a transmission device according to the invention operates with light transmission.

The same reference numbers are used in Figure 2 for the same or corresponding parts in Figure 1.

The embodiment of Figure 2 also consists of a steering wheel assembly 10 and a steering column assembly 20, but in Figure 2 they are shown in an axial cross section and shown in their correct, opposing installed position. The steering column itself and the steering wheel have been omitted, as in Figure 1, to simplify the illustration.

The steering wheel assembly 10, in turn , consists of an upper circuit carrier 11 and an upper cover 12 in which the upper circuit carrier 11 is held. The steering column assembly 20 consists in a corresponding manner, of a lower circuit carrier 21 and a lower cover 22 on which the lower circuit carrier 21 is mounted. No separate shielding components are presented in Figure 2, but they can be supplied. However, shields can also be produced by metal coatings on the upper cover 12 and the lower cover 22.

In the embodiment according to Figure 2, the upper circuit carrier contains the actual electronics 14 and at least one light-emitting and light-receiving element 15, in association with an optical distributor or optical waveguide 16, which extends along the perimeter and guides light emitted from the element 15 and distributes it around the perimeter, or directs the light received at any other site of the perimeter to the element 15. The element or the elements 15 are powered and controlled by the electronic system 14, in order to transmit optical signals, or the electronic system is powered by the element or the elements 15 are due to received optical signals.

The lower circuit carrier 21 also contains the actual circuit electronics 24, together with at least one light-emitting and light-receiving element 25. The element or the elements 25 are positioned relative to the light distributor or optical waveguide 16, so that they are positioned opposite it and optical signal transmission takes place from the element or the elements 25 and the optical distributor or optical waveguide 16 and thus from it to the element or the elements 15.

To implement the light transmission and light reception function, different elements, namely light-emitting diodes and photodiodes can be used.

In the embodiment example according to Figure 2, the optical distributor or optical waveguide 16 is assigned to the upper circuit carrier 21. Of course, it is evident that the arrangement can also be reversed by assigning the optical distributor or optical waveguide to the lower circuit carrier 21. Also, the two circuit carriers can each be provided with one optical waveguide or optical distributor , but this will increase the space requirements and thus appears to be less desirable.

Due to optical signal transmission using and due to the distribution of light (i.e. the transmitted light or the collected light) by the optical distributor or optical waveguide, a signal transmission is possible in any possible rotary position, whereby a single light-emitting and light-receiving element for each circuit carrier is basically sufficient, but, of course, a certain number of such elements can be arranged around the perimeter. Thus, a contact-free and conductor-less signal transmission is possible without the generation of electrical fields for signal transfer, so that the signal transmission will not be disturbed by interfering electric fields.

The light transmission system can transfer wideband signals from stator and rotor and vice versa, and allows the implementation of a number of signal transmission channels between stator and rotor in order to allow a number of switching or control functions from the steering wheel or vial the steering wheel.

At the upper and lower circuit carrier 11 and 21, respectively, a plug 17 and 27, respectively, can be suppled for electrical connection to switches and displays in the steering wheel or the electric components; alternatively, a direct line connection can be used.

To provide the electric power to the electronic circuit on the upper circuit carrier 11 assigned to the steering wheel, there are strip line antennas 18 and 28 cooperating with each other and located on the two circuit carriers; these antennas operated in a frequency range of 1 MHz to 10 MHz, for instance. Thus the power required on the steering wheel for the switching electronics, for charging the storage capacitors, and also for back-lighting switches located in the steering wheel or for operation of display elements located in the steering wheel or for operation of display elements located in the steering wheel is transmitted wirelessly from the steering column. An arrangement of this type of the power transmission, or course, can also be sued in the embodiment according to Figure 1, even though this is not separately illustrated and described there.

Finally, Figure 2 shows an embodiment example for use in a steering wheel heater. For example, this can have a heating power of 100W. In this regard, a transmission coil 31 is located on the steering column and a receiving coil 32 is located on the steering wheel, which serves as heating in the steering wheel. Transmission coil 31 and reception coil 32 together form an electric transformer. In this way the heating power can be transferred wireless from the steering column to the steering wheel.

In the embodiment according to Figure 1, a steering wheel heater can also be installed according to the illustration used in the embodiment example of Figure 2.

The illustrated embodiment examples show how the invention can be created in a practical implementation, and they also show the advantages which are attained with this invented transmission system. The small space requirement of the invented transmission system leaves enough space free to install a contact-free and conductor-less operating steering wheel heater in a steering wheel, as illustrated in Figure 2.

The embodiment in Figure 2 has the particular advantage that the bi-directional signal transmission takes place by light and thus an extremely dependable transmission results. Electromagnetic or eletrostatic interference has no effect on the system and the transmission quality, since the critical region, namely the transmission route, is created by light.

## Claims

1. Device for contact-free transfer of electrical signals between components rotating relative to each other, in particular in a steering wheel between steering column assembly and steering wheel, with the following properties:
a) an electrical circuit carrier with signal transmission and signal reception elements, said carrier is on the stator side.
b) an electrical circuit carrier with signal transmission and signal reception elements, said carrier is on the rotor side.
c) the stator-side and rotor-side electrical circuit carriers neighbor each other axially or radially with their signal transmission and signal reception elements and
d) the signal transmission and signal reception elements of the neighboring stator-side and rotor-side circuit carriers are positioned relative to each other and with their perimeter extension are configured so that bi-directional signal transmission is possible between stator-side circuit carrier and rotor-side circuit carrier in any possible relative rotational position of the rotor-side circuit carrier with respect to the stator-side circuit carrier.

2. Device according to Claim 1, wherein the signal transmission and signal reception elements are designed as antenna in a planar structure positioned on the stator-side circuit carrier and rotor-side circuit carrier, between which the signal transmission occurs by means of high frequency.

3. Device according to Claim 2, wherein the frequency range of signal transmission is in the megahertz range.

4. Device according to Claim 2 or 3, wherein the stator-side circuit carrier is surrounded by a stator-side electrical shield and the rotor-side circuit carrier is surrounded by a rotor-side electrical shield.

5. Device according to Claim 4, wherein the stator-side and rotor-side shields engage in each other with cylindrical side walls.

6. Device according to Claim 1, wherein the stator-side circuit carrier and the rotor-side circuit carrier support at least one light-emitting and light-receiving element used as signal transmitting and signal reception element, respectively, in addition to the actual switching electronics.

7. Device according to Claim 6, whereby there is an optical distributor or optical waveguide extending along the perimeter on at least one of the two stator-side and rotor-side circuit carriers; said waveguide is connected with the particular light-emitting and light-receiving element.

8. Device according to one of Claims 1 to 7, wherein the signal transmission takes place by means of frequency modulation of a base signal or by multiple channel multiplex operation.

9. Device according to one of Claims 1 to 8, wherein the electrical power supply to the electronic circuit is transmitted to the rotor-side circuit carrier by means of cooperating strip antennas located on the two stator-side and rotor-side circuit carriers, from the stator-side to the rotor-side in a contact-free and conductor-less manner.

10. Device according to one of Claims 1 to 9 for a steering wheel, wherein addition, contact-free steering-wheel heating is provided, which consists of a transmitter coil on the steering column side, and a received coil on the steering wheel side which is used simultaneously as a heating coil in the steering wheel; said coils cooperate with each other as a kind of electrical transformer.
